Europäisches Patentamt

European Patent Office

Office européen des brevets

(11) Publication number: **0 593 165 A2**

## EUROPEAN PATENT APPLICATION

(21) Application number: **93307206.8**

(22) Date of filing: **13.09.93**

(51) Int. Cl.5: **H04M 11/06, H04B 14/04**

(30) Priority: **08.10.92 GB 9221183**

(43) Date of publication of application:
**20.04.94 Bulletin 94/16**

(84) Designated Contracting States:
**DE FR GB**

(71) Applicant: **Hocking, Richard John**
**16 Westbourne Close**
**Salisbury, Wiltshire, SP1 2RU(GB)**
Applicant: **Schwarz, Peter John**
**32 Pauls Dene Crescent**
**Salisbury, Wiltshire, SP1 3OX(GB)**

(72) Inventor: **Hocking, Richard John**
**16 Westbourne Close**
**Salisbury, Wiltshire, SP1 2RU(GB)**
Inventor: **Schwarz, Peter John**
**32 Pauls Dene Crescent**
**Salisbury, Wiltshire, SP1 3OX(GB)**

(74) Representative: **Harris, Ian Richard et al**
**c/o D. Young & Co.,**
**21 New Fetter Lane**
**London EC4A 1DA (GB)**

㊤ **Telecommunication apparatus for converting analog speech signals low bitrate digital signals.**

㊗ For the connection of at least one low bit rate telephony channel via a tandem connection, a telecommunication apparatus is provided which includes a modem (601,602) for converting low bit rate data received from a low bit rate telephony channel to modem data for connection to the tandem switch (58) and/or for converting modem data from said tandem switch for transmission via a low bit rate telephony channel. The tandem switch can be an analogue switch, or use analogue trunks, alternatively the tandem switch can be a digital switch. The tandem switch can also be an intermediate node in a digital radio or digital mobile radio system. In all cases the tandem connection of low bit rate digital communication channels is thereby possible without the necessity of carrying out multiple stages of compression and decompression of speech, or multiple stages of operation of any relay mechanism such as, for example, a fax relay or signalling relay when the low bit rate channel is carrying information such as fax or signalling that would otherwise need to be relayed.

FIG. 4

Rank Xerox (UK) Business Services
(3.10/3.09/3.3.4)

This invention relates to Apparatus for the connection of at least one low bit rate telephony channel via a tandem connection.

In telecommunications networks it is commonplace for analogue signals to be converted into digital signals. Various international standards govern this conversion including for example, Pulse Code Modulation (PCM) at a digital bit rate of 64,000 bits per second (bps) and Adaptive Differential PCM (ADPCM) at a digital bit rate of 32,000bps.

Throughout this specification, the term "PCM codec" will be applied to devices that convert analogue signals to either PCM or ADPCM or carry out the reverse function or both.

Low bit rate voice encoding involves the conversion of analogue speech signals to a low bit rate digital representation: low bit rate voice decoding involves the conversion of low bit rate digital signals to analogue speech.

Low bit rate conversion is typically carried out in two stages: the first involves the conversion from analogue to a digital signal. The second stage eliminates unnecessary redundancy in the signal thereby reducing the bit rate required to carry the original signal. This stage is usually known as compression. The decoding process utilises the same steps in reverse. The compression/decompression process is typically implemented using software that operates within a processor device specially optimised to rapidly compute mathematical functions, known as a Digital Signal Processor (DSP).

The uncompressed digital signal may be based on any suitable data rate. If PCM at 64,000bps is used, the compression/decompression stage may be applied directly to a signal that has already been converted to PCM elsewhere in the telecommunications network.

Throughout this specification, the term "LBRV Codec" (Low Bit Rate Voice COder/DECoder) will be used to refer to devices or assemblies of devices that carry out either compression, decompression or both, on either analogue or uncompressed digital signals. LBRV Codecs digitise telephone quality speech at typical data rates of between 2,400bps and 16,000bps.

The compression/decompression process is usually optimised to operate primarily with speech and will typically not pass modem data. A modem (MOdulator/DEModulator) is a device that converts digital signals to an analogue form suitable for transmission over a telecommunications network: modems operate over any conventional network whether analogue or PCM digital, transmission system or telephone exchange, or any combination. They are widely used, for example in facsimile machines and typically operate at data rates of between 300bps and 19,200bps.

Because modem information will not pass through a typical LBRV Codec, it is necessary to bypass the LBRV Codec if it is required to operate facsimile machines, particularly at their maximum transmission rate, via a low bit rate communications channel. This "fax relay" is typically implemented by incorporating modems within the low bit rate system to re-convert the facsimile (modem) signal back into a digital signal. Because the data rates for both modem and LBRV Codec are similar, it is then possible to transmit the digital facsimile signal in place of the compressed digital speech signal.

In some low bit rate systems the modem functions are implemented as software operating within the DSP that forms part of the LBRV Codec. Detection of facsimile data and automatic switching between speech compression and facsimile/modem software ensures that the subscriber can connect a telephone or facsimile machine to the low bit rate network with no special precautions.

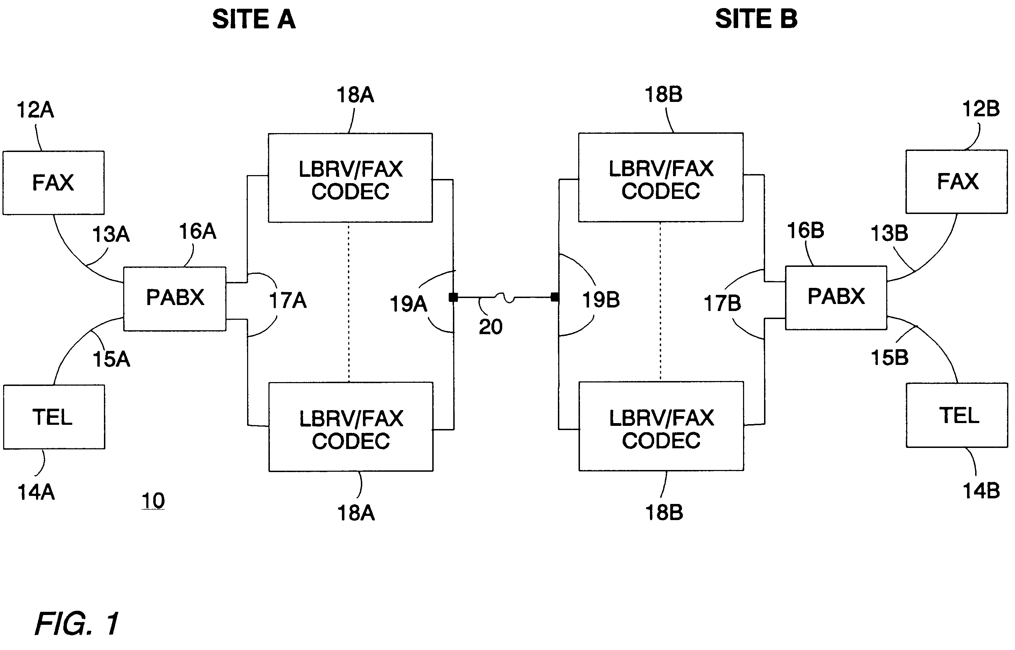

Because the international PCM standard specifies an operating speed of 64,000bps, digital telephone lines are commonly available operating at this speed. One such service in the United Kingdom is provided by British Telecom and is known as KiloStream. Comparable services are operated in other countries. One application of low bit rate voice coding technology involves the use of LBRV Codecs to provide up to ten independent speech channels on a single KiloStream line. This is carried out by operating the LBRV Codec at 6,400bps and multiplexing ten such digital bit streams onto the 64,000bps KiloStream line with obvious savings in telephone line call charges. A simple point to point link is shown schematically in Figure 1.

In Figure 1, a point to point link 10 is illustrated in block diagrammatic form for carrying multiple low bit rate telephony channels between a first site, site A, and a second site, site B. Site A and site B are assumed in Figure 1 to have the same equipment configuration, as represented by the use of like reference numerals suffixed by A or B, respectively, although it will be appreciated that the equipment configuration at each site could be different from that illustrated and from each other. In Figure 1, each of site A and B includes one or more facsimile (fax) machines 12A/B and one or more telephone sets 14 A/B, each connected via a respective analogue subscriber line 13A/B, 15A/B to a private telephone exchange (PABX) 16A/B. Each PABX is connected via a plurality of analogue trunks 17A/B via respective LBRV/Fax Codecs 18A/B and respective low bit rate channels 19A/B to a digital trunk 20 which carries multiple low bit rate channels between the sites A and B.

Other than in the simple case of two or three sites, telephone networks cannot be designed economically using only point to point links. If a large number of sites are to be connected then a hierarchical structure is required. For example, five sites would require ten separate point to point links to connect every location to every other. If however four sites were each connected to the fifth site (by four point to point links) and the fifth site provided a means whereby any link could be cross-connected to any other link, then it would be possible to set up a connection between any of the five sites using four links not ten. A more general network would carry multiple channels on each link and would provide that individual channels could be switched independently to different destinations.

In a telephone network the method of connecting two users via an intermediate node is known as tandem switching and the central connecting system is known as a tandem exchange or tandem switch. The transmission links are known as trunk circuits or simply trunks. In this specification, the term tandem switch will refer to telephone exchanges which provide both tandem switching, together with non-tandem connections to users located at the same node as the tandem switch. However, the term tandem switching will be reserved for connections that use at least two trunks in series. Tandem switches are connected to the trunks through either analogue or digital PCM trunk interfaces. These interfaces are also governed by International and/or National specifications.

In conventional networks it is possible to connect a digital PCM trunk to a tandem switch through either an analogue or digital PCM interface. However, if the former is used it involves converting from analogue to PCM and back on every trunk. The degradation introduced by repeated conversions between analogue and PCM digital is relatively small, but even so it has become standard practice to avoid the degradation by eliminating intermediate conversions wherever possible. In conventional networks this is straightforward as both the digital PCM trunks and digital PCM tandem switches have been designed with the same interface standards, and PCM may be used throughout.

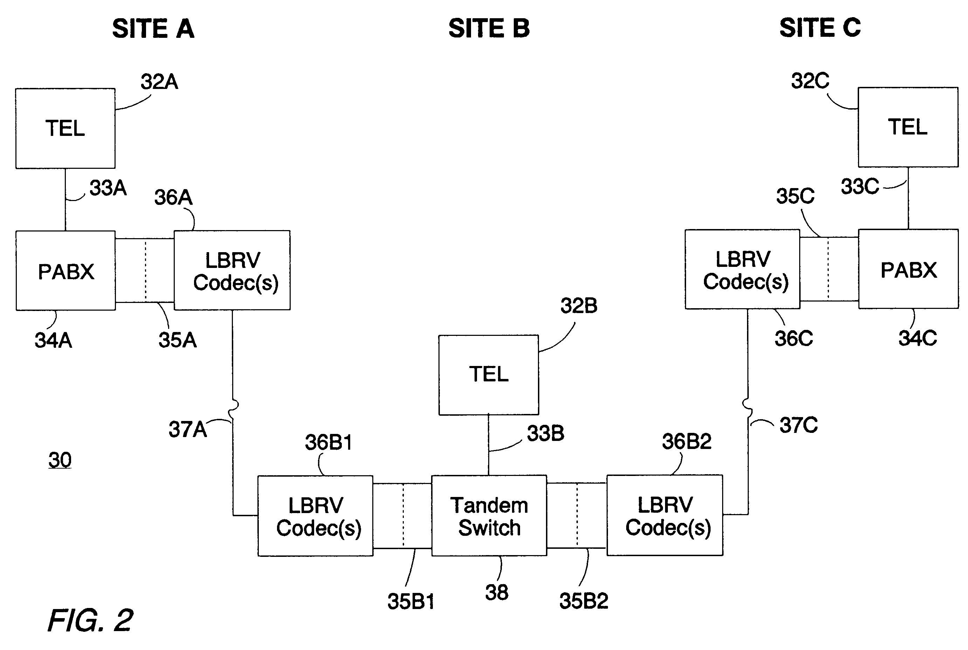

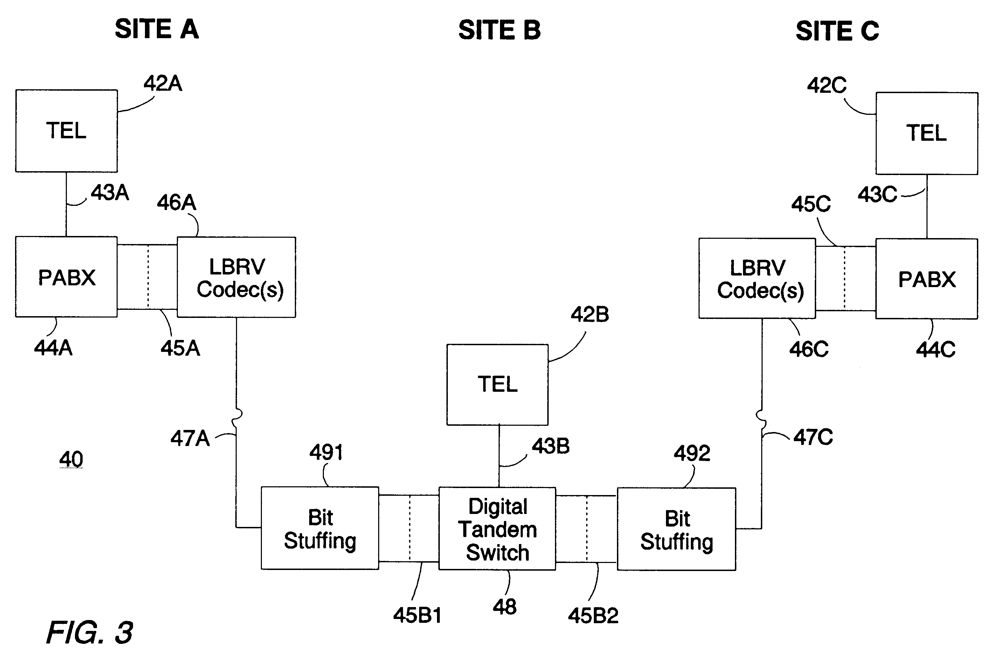

However, in low bit rate digital networks there is no common interface between the low bit rate data and the higher bit rate PCM so it is not possible to directly use low bit rate digital data throughout. Neither is it commercially feasible to redesign the world's installed base of tandem switches to directly switch low bit rate digital data. If tandem switching of low bit rate digital data is required it is therefore necessary to instead convert the low bit rate digital data to one of the tandem switch interface standards, either analogue or PCM digital (and vice-versa). The converted signal is then routed through the tandem switch and re-converted back to low bit rate digital data for onward transmission. This is shown schematically for a tandem switch with analogue interfaces in Figure 2 and with PCM digital interfaces in Figure 3. Both these approaches are associated with major problems.

Figure 2 illustrates, in block diagrammatic form, a typical LBRV Codec-based network 30 comprising three sites A, B and C. In Figure 2, site A and site C are assumed to have the same equipment configuration, as represented by the use of like reference numerals suffixed by A or C, respectively, although it will be appreciated that the equipment configuration at each site could be different from that illustrated and from each other. Site B however, is configured as a tandem switch 38 enabling communication between sites A and C. Like equipment to the sites A and C is referenced by like numerals, but suffixed by the letter B. Each of sites A, B and C is assumed to include at least one telephone set 32A/B/C, each connected via a respective analogue subscriber line 33A/B/C to a telephone exchange. In the case of sites A and C, the telephone exchanges are in the form of simple private telephone exchange (PABX) 34A/C. In the case of site B, however, the telephone exchange is configured as the tandem switch 38. Each of the PABXs 34A and 34C are connected via a plurality of analogue trunks 35A/C via LBRV Codec(s) 36A/C to a respective digital trunk (e.g. 64,000 bps) 37A/C carrying low bit rate channels. In the case of site B, however, the tandem switch 38 is connected via first and second sets of analogue trunks 35B1/B2 via respective LBRV Codec(s) 36B1/B2 to a respective one of the digital trunks 37A/C.

This approach creates a problem for the transmission of low bit rate speech in that low bit rate speech from a subscriber at site A to a subscriber at site C must be compressed and decompressed twice causing a reduction in speech quality. The conversion from low bit rate digital to analogue (and vice-versa) is conventionally carried out by an LBRV Codec (e.g. 36A/36B1/36B2/36C). However, as one LBRV Codec typically introduces around eighty milliseconds of delay and as much degradation in speech quality as ten or more PCM Codecs, multiple conversions between analogue and low bit rate digital speech are very undesirable. In fact, the typical result is that the speech quality reduces to an unacceptable level for just two links in series. If the low bit rate channel is carrying facsimile information, the additional delay may be several hundred milliseconds because the fax relay has to interact with the protocol that governs the communication between the fax machines. This cumulative delay may cause the communication protocol to fail, in which case the fax message will not be transmitted.

Figure 3 illustrates, in block diagrammatic form, the second approach mentioned above. US patent US-A-4924480 (Gay et al.) describes a private telecommunications network employing such an approach.

In the present Figure 3, a telephone network 40 between three sites A, B and C is illustrated. In Figure 3, site A and site C are assumed to have the same equipment configuration, as represented by the use of like reference numerals suffixed by A or C, respectively, although it will be appreciated that the equipment configuration at each site could be different from that illustrated and from each other. Site B however, is configured as a tandem switch 48 enabling communication between sites A and C. Like equipment to the sites A and C is referenced by like numerals, but suffixed by the letter B. Each of sites A, B and C is assumed to include at least one telephone set 42A/B/C, each connected via a respective analogue subscriber line 43A/B/C to a telephone exchange. In the case of sites A and C, the telephone exchanges are in the form of a simple private telephone exchange (PABX) 44A/C. In the case of site B, however, the telephone exchange is configured as the tandem switch 48. Each of the PABXs 44A and 44C are connected via a plurality of analogue trunks 45A/C via LBRV Codec(s) 46A/C to a respective digital trunk (e.g. 64,000 bps) 47A/C carrying low bit rate channels. In the case of site B, however, the tandem switch 48 is connected via first and second digital trunks carrying multiple so-called "bit-stuffed" (see the next paragraph) 64,000 bit per second (bps) channels via respective bit stuffers 491/492 to a respective one of the digital trunks 47A/C. When passing LBRV data via the tandem switch, the bit stuffer 491/492 on one side of the tandem switch adds redundant data to LBRV data received at that side of the tandem switch to match the 64,000 bps interface and the bit stuffer 492/491 at the other side of the tandem switch removes the redundant data to restore the LBRV data.

Thus, this second approach typically achieves the conversion by adding redundant bits to the low bit rate digital data to increase its bit rate to 64,000bps prior to routing through the tandem switch, then stripping out the redundant bits on the other side of the tandem switch to recover the original low bit rate signal. This so-called "bit-stuffing" approach is only useable on tandem switches with PCM interfaces. Commercially this is a severe limitation because many tandem switches, particularly in private networks, use analogue trunks, so there would be significant expense in converting these to PCM trunks. It may not even be possible to install PCM trunks if, for example, the tandem switch is based internally on analogue switching technology.

This invention seeks to provide a solution to the problems of using low bit rate digital communication channels with tandem switches.

In accordance with a first embodiment of the invention therefore, there is provided an apparatus for the connection of at least one low bit rate telephony channel via a tandem connection, the apparatus comprising modem means for converting low bit rate data received from a low bit rate telephony channel to modem data for connection to the tandem switch and/or for converting modem data from a tandem switch for transmission via a low bit rate telephony channel.

In accordance with another aspect of the invention, there is provided a method of providing a tandem connection of at least one low bit rate telephony channel via a tandem switch comprising the conversion of low bit rate data from a low bit rate telephony channel to modem data for connection via the tandem switch and/or the conversion of modem data from the tandem switch to low bit rate data for transmission via a low bit rate telephony channel.

Embodiments of the invention enable the tandem connection of low bit rate digital communication channels through either analogue or digital tandem switches or other switching systems without the necessity of carrying out multiple stages of compression and decompression of speech, or multiple stages of operation of any relay mechanism such as, for example, a fax relay or signalling relay when the low bit rate channel is carrying information such as fax or signalling information that would otherwise require to be relayed.

Broadly, therefore, an embodiment of the invention provides a connection system wherein modems carry the low bit rate digital data through a tandem switch.

The tandem connections can be achieved by converting the low bit rate digital data to modem data for subsequent connection to and via the tandem switch.

The modem may be implemented as an additional part of an LBRV Codec or the modem may be implemented as software only within the LBRV Codec. Preferably, therefore, the apparatus comprises second modem means for converting modem data from a tandem switch for further transmission via a further low bit rate telephony channel.

Preferably, the apparatus includes decision means for automatically selecting low bit rate data on the telephony channel to be converted by modem means. The decision means can form part of a low bit rate voice coder/decoder. Preferably, the low bit rate voice coder/decoder comprises programmable processing means with the decision means being implemented by suitably programming the programmable means.

The decision means preferably monitors the transmission received via the tandem switch for a tandem call and, on detection of a tandem call, routes the low bit rate data to the modem means for conversion to modem data. This can be achieved where the decision means monitors telephone signalling during the establishment of a call to detect tandem calls.

In other words, means may be provided whereby the decision to convert low bit rate digital data into modem data is implemented within the LBRV Codec based on network signalling information. Alternatively, means may be incorporated within the LBRV Codec to automatically detect a tandem connection. Preferably means are included whereby the decision to convert low bit rate digital data into modem data is implemented within the LBRV Codec based on the automatic detection within the LBRV Codec of a tandem connection.

Preferably, the modem means forms part of a low bit rate voice coder/decoder. The modem may be implemented as an additional part of an LBRV Codec or the modem may be implemented as software only within the LBRV Codec. Preferably, the low bit rate voice coder/decoder comprises programmable processing means, the modem means being implemented by suitable programming of the programmable means.

Preferably, the modem means, when connected to the tandem switch, is arranged to be used for the transmission of all information and, when not connected to the tandem switch, is arranged to be used for the transmission of facsimile information. In other words, the modem within an LBRV Codec which is used to carry the low bit rate data over the tandem connection may be the same modem as that used within the LBRV Codec to relay facsimile information over the low bit rate channel.

The tandem switch can be an analogue switch, or use analogue trunks, alternatively the tandem switch can be a digital switch. The tandem switch can also be an intermediate node in a digital radio or digital mobile radio system.

Further details and the method of operation of the system according to this invention are described by way of example hereinafter with reference to the accompanying drawings, in which:

Figure 1 is a schematic block diagram illustrating a conventional point to point link carrying multiple low bit rate communications channels;

Figure 2 is a schematic block diagram illustrating a typical LBRV Codec based network demonstrating the multiple compression problem with tandem switching using analogue interfaces;

Figure 3 is a schematic block diagram illustrating bit-stuffing to provide tandem switching without multiple compression/decompression;

Figure 4 is a schematic block diagram of an embodiment of the invention using modems to carry low bit rate digital data via the tandem switch using either analogue or PCM digital interfaces, without multiple compression;

Figure 5 is a schematic block diagram illustrating an example of an LBRV Codec for use in accordance with the invention;

Figure 6 is a schematic block diagram of an embodiment of the invention having LBRV Codecs with integral modems to carry low bit rate digital data via the tandem switch using either analogue or PCM digital interfaces, without multiple compression;

Figures 7A, 7B and 7C are state diagrams for illustrating the control of the operation of an example of an LBRV Codec in accordance with the invention.

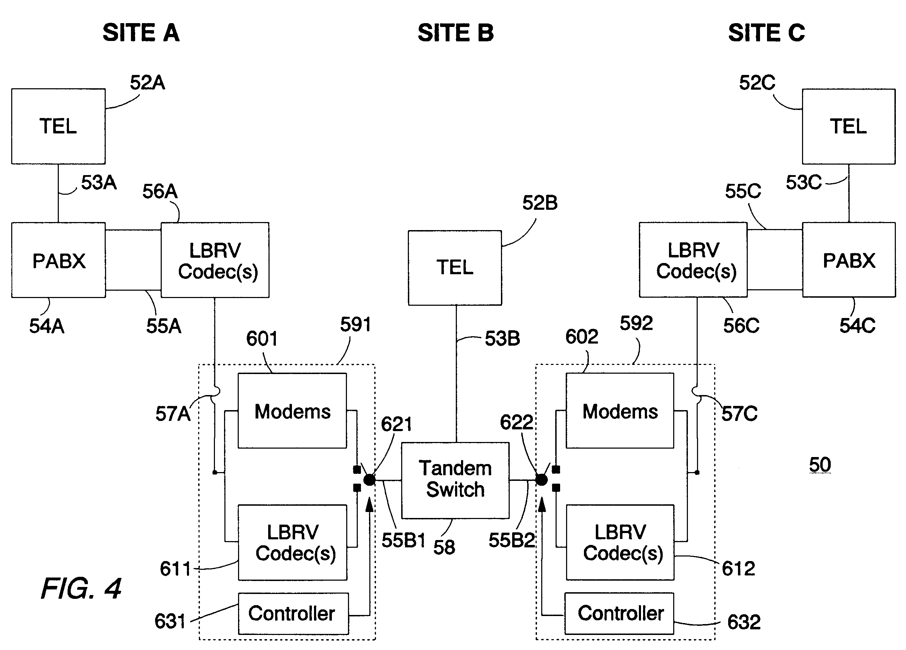

Figure 4 is a schematic block diagram of an embodiment of the invention in which modems are used to carry low bit rate data via the tandem switch without multiple compression. The basic principle of the apparatus shown in Figure 4 is that a tandem call is interfaced to the tandem switch via a modem whilst the subscriber end of the trunk is interfaced to the subscriber via the LBRV Codec. In this way either speech, signalling or facsimile/modem data may be transmitted through the tandem switch with equal facility. Furthermore, the tandem switch may be equipped with either analogue or PCM digital interfaces, both of which carry modem data equally well.

In Figure 4, a telephone network 50, typically a private telephone network, between three sites A, B and C is illustrated. It will be appreciated that in other examples, the telephone network may include more sites connected via one or more tandem switches, or may be a public telephone network using public telephone switches or a radio or cellular telephone network or any combination of these networks or switches. In Figure 4, site A and site C are assumed to have the same equipment configuration, as represented by the use of like reference numerals suffixed by A or C, respectively, although it will be appreciated that the equipment configuration at each site could be different from that illustrated and from each other. Site B however, is configured as a tandem switch enabling communication between sites A and C. Like equipment to the sites A and C is referenced by like numerals, but suffixed by the letter B. Each of sites A, B and C is assumed to include at least one telephone set 52A/B/C, each connected via a respective analogue subscriber line 53A/B/C to a telephone exchange. In the case of sites A and C, the telephone exchanges are in the form of simple private telephone exchange (PABX) 54A/C. In the case of site B, however, the telephone exchange is configured as a tandem switch 58. Each of the PABXs 54A and 54C are connected via a plurality of analogue trunks 55A/C via LBRV Codec(s) 56A/C to a respective digital communications trunk (e.g. 64,000 bps) 57A/C carrying low bit rate channels. In the case of site B, however, the tandem switch 58 is connected via analogue or digital trunks 55B1 and 55B2 to LBRV converters 591/592, respectively and hence to a respective one of the digital communication trunks 57A/C. When passing LBRV data from site A to site C, or vice versa, via the tandem switch (i.e., for a tandem call), the LBRV data is passed via the modems 601 and 602 on either side of the tandem switch 58 at site B. For communicating with site B, however, calls from site A or site C are passed via the LBRV Codec 611 or the LBRV Codec 612, respectively. The switches 621/622 schematically represent the selective switching of the modems 601/602 or the LBRV Codecs 611/612, as appropriate, under the control of controllers 631/632.

The end sites A and C may each be provided with a modem in addition to the LBRV Codec 56A/C so that a modem is provided at both ends of the communication trunks 57A/57C, thereby eliminating any requirement for different equipment at the subscriber and tandem switch ends of the trunks.

In Figure 4, the modems 601 and 602 and the LBRV Codecs 611 and 612 are shown as separate functional blocks. Likewise the controllers 631 and 632 are shown as separate functional blocks. However, as will be described hereinafter, the modems 601/602 and the controllers 631/632 can be provided as an integral part of their respective LBRV Codecs 611/612. In particular, where the LBRV Codec is implemented by means of programmable control logic (e.g., by means of gate array logic, ASIC technology, etc.) or a Digital Signal Processor (DSP), the modem and the controller can be provided by suitably programming the programmable control logic or DSP. In this arrangement, the use of digital signal processing within the LBRV Codec can ensure that no additional hardware is required and therefore no additional manufacturing cost is incurred in providing the modem function.

Preferably, the modem which is used for the passing LBRV data for a tandem call at site B, can also be used to provide a fax relay function. As there is never a circumstance when more than one function (speech compression/fax relay/tandem modem) is required simultaneously, there is no requirement to increase the DSP processing power to any significant extent. Furthermore, this minimises the total design effort required. This arrangement is particularly advantageous where the modem is implemented in software on programmable hardware.

The provision of the controllers 631 and 632 along with the logical switching functions 621 and 622, whether implemented by separate hardware configurations, or in software on programmable hardware enables control of the connection functions to be executed. The connection of the LBRV Codec to a tandem switch does not automatically imply that a tandem connection has been established: it can be seen from Figure 4 that a call between site A and site B does not involve a tandem connection even though site B is a tandem switch.

Controlling whether the low bit rate voice coding function or the tandem modem function is executed can be achieved in response to a control signal derived externally from the network signalling system. Alternatively, or in addition, the automatic detection of a tandem connection can be achieved means of the controller 631/632 of one LBRV Codec 611/612 detecting whether that LBRV Codec has been connected to another similar LBRV Codec 612/611 (i.e., a tandem connection). In this way the LBRV Codec may be designed to automatically and dynamically configure itself for tandem and non-tandem calls.

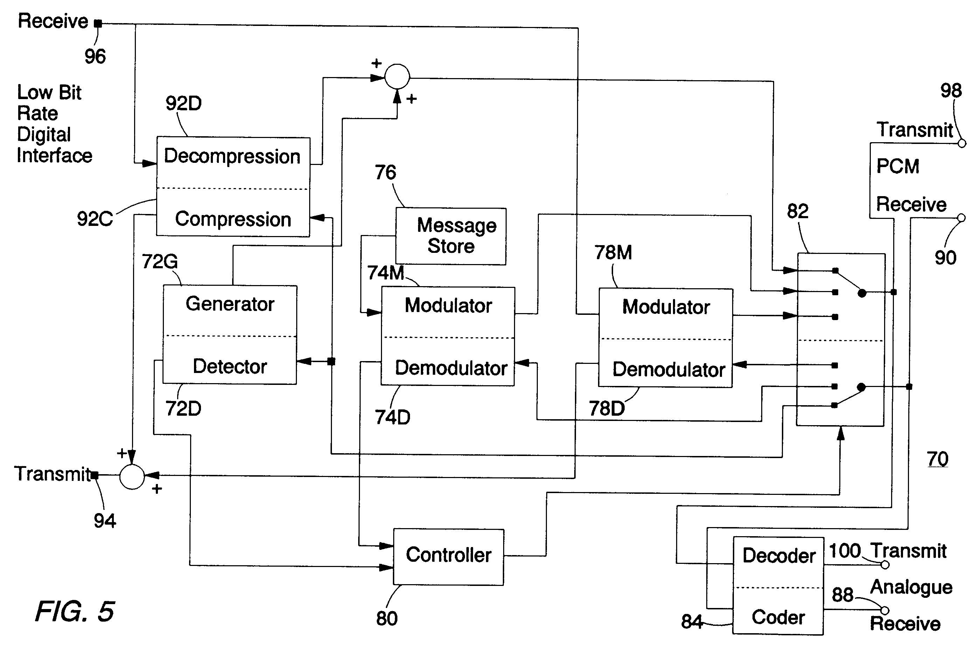

Aspects of the operation of one preferred embodiment of the invention will now be described in more detail with reference to Figure 5, which is a schematic block diagram of an LBRV Codec 70 with an integral modem and controller for providing the functions of either of the LBRV converters 591 or 592 of Figure 4. The LBRV Codec 70 comprises functional elements including a signature generator/detector 72, a V.21 modem (and message detector) 74, a message store 76, a V.29 modem 78, a controller 80 and a switch block 82. As illustrated, the LBRV Codec 70 also includes a PCM Codec 84 and a compression/decompression processor 92.

In normal speech compression/decompression mode, the initial analogue speech signal from signal line 88 is band-pass filtered and converted to a 64,000bps digital PCM signal by the PCM Codec 84. Alternatively, speech that has previously been converted to a PCM signal elsewhere in the network may be interfaced directly from line 90, bypassing the PCM Codec. The PCM signal is routed to a compression processor 92C where signal compression algorithms are employed to remove redundancy and reduce the data rate to less than 64,000bps. The present invention uses a known technique, Codebook Excited Linear Prediction (CELP), for compression to reduce the data rate to one of 4,800bps, 6,400bps or 9,600bps, although there are many other compression techniques (for example multipulse excited linear prediction) and data rates that could alternatively be used. The compressed signal is then routed to the low bit rate digital port 94 for transmitting via the low bit rate digital communications channel. In the opposite direction, compressed speech signals are received by the low bit rate digital port 96, decompressed by a CELP algorithm in a decompression processor 92D and converted to a 64,000bps PCM signal. The PCM speech signal is then combined with a low level PCM signal from a signature generator 72G and either interfaced directly to an external PCM network at 98, or converted by the PCM Codec 84 to an analogue signal for interfacing to an analogue network at 100.

A signature detection algorithm employed in the signature detector 72D is similar to algorithms used in other systems where a wanted low level signal has to be recovered reliably in the presence of much greater levels of interfering signals or noise. Examples include the recovery of radar signals and the recovery of information from direct sequence spread-spectrum radio transmission systems. In this invention, the interfering signal is speech, whilst the wanted signature is a low level signal which sounds like normal background noise to the user. Correlation over an extended period of time, typically 250 milliseconds, ensures that the signature detector will not be false triggered in normal speech mode, whilst the frequency spectrum of the signature generator is continually modified to match the spectrum of the decompressed speech in real time. Because the human auditory system is relatively insensitive to noise at the same frequency as other (wanted speech) signals, a property known as noise-masking, this technique makes the signature less likely to be noticed by a user.

It should be noted that although the present invention uses a signature detector to carry out automatic detection as described above, the detection process could be carried out in a variety of other ways, including for example, the following.

a) Monitoring the echo characteristic to determine when a four-wire connection (ie no echo) is present. During this period when there is no through connection low level modem start up/stop sequences are transmitted and detected.

b) Monitoring the network signalling and during the time when the call is being established, but before the called party answers, low level modem start up/stop sequences are transmitted and detected. In this case the network signalling does not itself control the selection of modem/voice coding software, it merely indicates a time period when the LBRV Codec detection process may be operated.

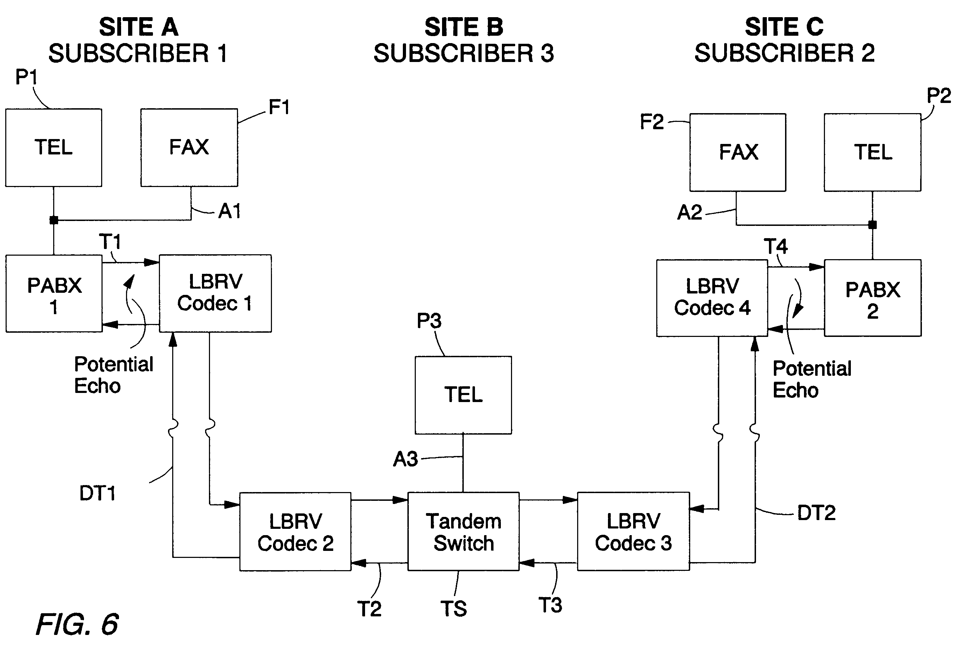

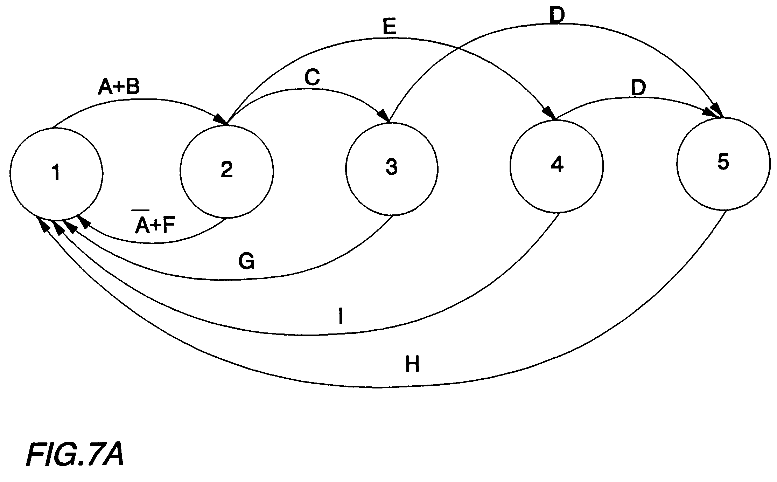

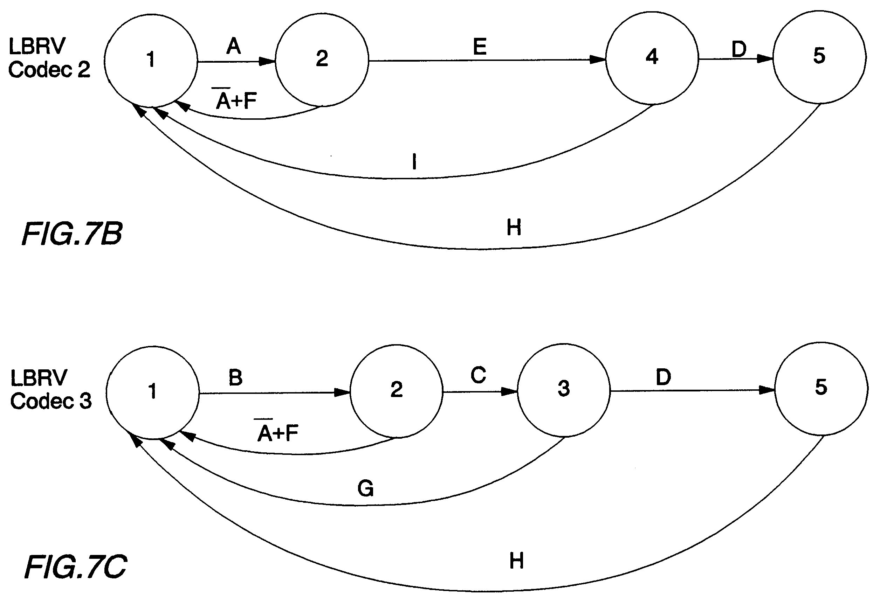

The various operating states of the LBRV Codec will now be described with reference to Figures 6 and 7 and Tables 1 and 2 to be found at the end of this description. Figure 6 is a simplified schematic block diagram of a specific network employing the present invention for explaining various operating states thereof. Figure 7A is a general state diagram and Figures 7B and 7C are state diagrams for the LBRV Codec 2 and the LBRV Codec 3, respectively, for explaining the various states. Table 1 is a table of those states and Table 2 is a table of events.

The network shown in Figure 6 corresponds generally to that shown in Figure 4. However, sites A and B are illustrated as including a facsimile machine F1 and F2, respectively as well as a telephone P1 and P2, respectively. Site B is illustrated as having a telephone P3, only, although it will be appreciated that each of the sites may have more than one telephone and/or facsimile machine. The facsimile and telephone machines are connected by respective analogue subscriber lines A1, A2 and A3 to respective telephone exchanges at the sites A, B and C.

The telephone exchanges PABX 1 and PABX 2 of Figure 6 correspond to the PABX 54A and PABX 54C of Figure 4, respectively. LBRV Codec 1, LBRV Codec 2, LBRV Codec 3 and LBRV Codec 4 correspond generally to the LBRV Codec 56A, LBRV converter 591, LBRV converter 592 and LBRV Codec 56C, respectively. Each of the LBRV Codecs 1, 2, 3 and 4 is configured as illustrated in Figure 5 and thereby includes modem and controller (i.e., switchable modem) functions. The PABX 1 is connected to the LBRV Codec 1, the tandem switch TS is connected to the LBRV Codec 2, the tandem switch TS is connected to the LBRV Codec 3 and the PABX 2 is connected to the LBRV Codec 4 by sets of analogue or PCM trunks T1, T2, T3 and T4, respectively. The LBRV Codec 1 is connected to the LBRV Codec 2 via a digital trunk (e.g. 64,000 bps) DT1 carrying multiple channels of low bit rate digital data and the LBRV Codec 3 is connected to the LBRV Codec 4 via a digital trunk (e.g. 64,000 bps) DT2 carrying multiple channels of low bit rate digital data.

Prior to a tandem connection being made, all four LBRV Codecs are in state 1 as shown in Figure 7 and Table 1. In this state, the speech compression/decompression function 92, the signature generator and detector 72 and the V.21 modem receiver and detector 74 are all operating. In the current system the V.21 modem 74 operates only on one of the V.21 modem channels, that is on V.21 channel two, because full duplex operation (on one pair of wires) is not required. Fax machines also use V.21 channel two to handle their communications protocol for the same reason. It can be seen that LBRV Codecs 1 and 4 cannot receive any signature signal because their analogue/PCM ports 88/100 are not connected to any signature source. It can also be seen that LBRV Codecs 2 and 3 are not currently receiving any signature signal

EP 0 593 165 A2

because the tandem connection represented schematically by the tandem switch TS has not yet been made. None of the V.21 modems 74 are transmitting or receiving any modem data.

Now consider the case of subscriber 1 at site A, who wishes to call to subscriber 2 at site C. Subscriber 1 lifts his handset and dials the number. The tandem switch TS receives this information via its signalling system which is a normal part of a telecommunications network, and analyses it to determine the required call routing. If the tandem switch TS determines that the call is to be routed to subscriber 2, it makes a connection between the appropriate trunks (that is, between the trunk T2 connected to LBRV Codec 2 and the trunk T3 connected to LBRV Codec 3) and relays the signalling information, modified as required, to PABX 2.

As soon as the tandem switch TS makes the connection between LBRV Codecs 2 and 3, the signature detectors 72D in LBRV Codecs 2 and 3 will both start receiving a signature. Consider the case where, for example, LBRV Codec 2 detects the signature (event A) before LBRV Codec 3. It can be seen from Figure 7B that event A causes LBRV Codec 2 to move to state 2, turning off its PCM Codec 84 and turning on its V.21 modem modulator 74M. The V.21 modem modulator 74M transmits a repeated sequence of bytes from the message store 76 as shown in Figure 5, and LBRV Codec 3 in state 1 now receives both the low level signature and the V.21 message from LBRV Codec 2. Upon receiving m successive bytes, or detecting the low level signature, LBRV Codec 3 also transits to state 2.

The reason for turning off the PCM Codec when entering state 2 may now be explained: referring to Figure 6 a potential echo path exists at both PABX 1 and PABX 2, caused by an impedance mismatch at the two to four wire conversion carried out between the four wire trunk connections and the two wire subscriber connections. This echo could cause a V.21 demodulator 74D to detect a message from its own V.21 modulator 74M. To prevent this the compression/decompression function 92 of the LBRV Codec 2 is turned off after m bytes of V.21 message have been received, thereby eliminating the echo path. In order to transit to state 3 (event C) a total of n bytes (n > m) are required, so event C cannot be caused by an echo.

As it has been assumed that LBRV Codec 2 has transited to state 2 first, it is probable that LBRV Codec 3 will detect event C and transit to state 3 first. LBRV Codec 3 accordingly turns off its signature generator/detector 72 and transmits an acknowledgement (a repeated sequence of bytes) via its V.21 modem 74. In due course LBRV Codec 2 detects this acknowledgement (event E), and transits to state 4, turning off its V.21 modulator 74 M and turning on its V.29 modulator 78M. LBRV Codec 3 detects the end of V.21 transmission and transits to state 5, turning off everything except for its V.29 modulator 78M and demodulator 78D. In its turn, LBRV Codec 2 detects the end of V.21 transmission and also transits to state 5.

The V.29 modems 78 detect their start-up/training sequence in the normal manner as specified in the CCITT V.29 specification and from then on until the end of the call, the low bit rate data is transmitted between LBRV Codecs 2 and 3 as V.29 modem data. LBRV Codecs 1 and 4 remain in state 1 and the call proceeds between subscribers 1 and 2 with only a single level of speech compression/decompression. At the end of the call, the tandem switch breaks the connection between LBRV Codecs 2 and 3, which event (event H) is detected by the V.29 modems and both LBRV Codecs 2 and 3 transit back to state 1, ready to accept the next call.

In the event that subscribers 1 and 2 used facsimile machines instead of telephones, and if subscriber 1 originated the call, then LBRV Codecs 2 and 3 would transit to state 5 as previously described, and in due course the fax machine attached to LBRV Codec 4 would answer the call, transmitting its response preceded by a V.21 preamble (one second of Hex7E). LBRV Codec 1 would detect this V.21 preamble, transmit an unique low bit rate digital code (to LBRV Codec 4) to announce that it is switching over to fax relay mode of operation, and then switch over to fax relay mode. Hence the handshake and set up information (eg data rate, page size etc) is only analyzed and relayed once. This contrasts with the prior art situation shown in Figure 2, where each pair of LBRV Codecs has to handshake and sequentially analyzed the set up information with almost double the delay as a result. It is a particular advantage with the arrangement described above that the V.29 modem standard employed in facsimile machines also provides fast training (eg V.29 achieves training in 0.253 seconds). Other modem standards may be much slower: for example V.32 modems take up to 12 seconds to achieve training.

This invention therefore provides a means e.g. an LBRV Codec including first modem means for converting received low bit rate data to modem data for connection to the tandem switch, or telecommunication apparatus or a telecommunications system incorporating such an LBRV Codec, whereby the tandem connection of low bit rate communication channels carrying voice information may be achieved without carrying out multiple stages of voice compression and decompression, and wherein the tandem connection of low bit rate communication channels carrying signalling information or demodulated modem or facsimile information may be achieved without carrying out multiple stages of operation of a relay.

8

The invention also provides a method of providing a tandem connection of at least one low bit rate telephony channel via a tandem switch comprising:

a) receiving low bit rate telephony data from a low bit rate telephony channel;

b) converting the low bit rate telephony data to modem data; and

c) connecting the modem data via the tandem switch.

The method can provide the further steps of:

d) re-converting the modem data connected via the tandem switch to low bit rate telephony data; and

e) transmitting the reconverted low bit rate data on a further low bit rate channel.

Although a particular example of the invention has been described, the invention is not limited thereto and many additions and/or modifications are possible within the scope of the invention.

For example, the invention is not restricted to fixed telecommunication networks. It is equally applicable to digital mobile systems such as the GSM digital cellular network and to proposed digital personal communications systems such as the Motorola "Iridium" satellite based network.

Also, in the illustrative embodiments of the invention, automatic detection of a tandem call is provided in order to facilitate the decision when to either modulate/demodulate or compress/decompress received data. An LBRV Codec using automatic tandem detection may be installed transparently at any location in the network with no installation dependent knowledge. However, alternatively, it would be possible that the decision on the existence of a tandem call could instead be made on the basis of intelligence extracted from the network signalling system. Such intelligence would include information that could vary from network to network, such as the numbering plan for the nodes and sites in the system. In such a case, the direct use of network signalling information to control the decision regarding the presence of a tandem call may require installation dependent programming in order to correctly interface the extracted intelligence to the LBRV Codec, as will be appreciated by one skilled in the art.

| STATE | SPEECH COMPRESSION/ DECOMPRES- SION | SIGNATURE | | V.21 MODEM | | V.29 MODEM | |
|---|---|---|---|---|---|---|---|
| | | GENE- RATOR | DETE- CTOR | MODULAT- OR (TX) | DEMODUL- ATOR(RX) | MODULAT- OR (TX) | DEMODUL- ATOR(RX) |
| 1 | ON | ON | ON | OFF | ON | OFF | OFF |
| 2 | OFF | ON | ON | ON | ON | OFF | OFF |
| 3 | OFF | OFF | OFF | ACK | ON | OFF | OFF |
| 4 | OFF | OFF | OFF | OFF | ON | ON | OFF |
| 5 | OFF | OFF | OFF | OFF | OFF | ON | ON |

Table 1

| EVENT | DESCRIPTION |
|---|---|
| A | Signature Detector detects signature |
| B | V.21 Modem receives M bytes of V.21 message |
| C | V.21 Modem receives N bytes of V.21 message |
| D | V.21 Modem detects end of received V.21 transmission |
| E | V.21 Modem detects Acknowledgement |
| F | V.21 Modem transmits P bytes of V.21 Acknowledgement |
| G | V.21 Modem finishes transmission of Acknowledgement |
| H | V.29 Modem detects loss of V.29 or fail to train |
| I | Timeout (Failure to detect end of Acknowledgement) |
| A | Signature Detector detects loss of signature |

Table 2

**Claims**

1. Apparatus for the connection of at least one low bit rate telephony channel via a tandem connection, the apparatus comprising modem means for converting low bit rate data received from a low bit rate telephony channel to modem data for connection to the tandem switch and/or for converting modem data from a tandem switch for transmission via a low bit rate telephony channel.

2. Apparatus according to claim 1 comprising decision means for automatically selecting low bit rate data on the telephony channel to be converted by modem means.

**3.** Apparatus according to claim 2 comprising a low bit rate voice coder/decoder, wherein the decision means forms part of the low bit rate voice coder/decoder.

**4.** Apparatus according to claim 3, wherein the low bit rate voice coder/decoder comprises programmable processing means, the decision means being implemented by programming the programmable processing means.

**5.** Apparatus as claimed in claim 3 or claim 4 wherein the decision means monitors the transmission received via the tandem switch and/or monitors telephone signalling during the establishment of a call to detect tandem calls and, on detection of a tandem call, routes the low bit rate data to the modem means for conversion to modem data.

**6.** Apparatus according to any of the preceding claims comprising a low bit rate voice coder/decoder, wherein the modem means forms part of the low bit rate voice coder/decoder.

**7.** Apparatus according to claim 6, wherein the low bit rate voice coder/decoder comprises programmable processing means, the modem means being implemented by suitable programming of the programmable means.

**8.** Apparatus according to any of the preceding claims wherein the modem means, when connected to the tandem switch, is arranged to be used for the transmission of all information and, when not connected to the tandem switch, is arranged to be used for the transmission of facsimile information.

**9.** Apparatus as claimed in any one of the preceding claims in the form of a low bit rate voice coder/decoder.

**10.** Apparatus according to any of the preceding claims wherein the tandem switch is an analogue switch, or uses analogue trunks, or alternatively is a digital switch.

**11.** Apparatus as claimed in any of the preceding claims wherein the tandem switch is an intermediate node in a digital radio or digital mobile radio system.

**12.** A telecommunications system comprising apparatus as claimed in any one of the preceding claims.

**13.** A method of providing a tandem connection of at least one low bit rate telephony channel via a tandem switch comprising the conversion of low bit rate data from a low bit rate telephony channel to modem data for connection via the tandem switch and/or the conversion of modem data from the tandem switch to low bit rate data for transmission via a low bit rate telephony channel.

**SITE A**

**SITE B**

*FIG. 1*

FIG. 2

# SITE A

# SITE B

# SITE C

FIG. 3

EP 0 593 165 A2

FIG. 4

SITE A

SITE B

SITE C

TEL — 52A

53A   56A

PABX   LBRV Codec(s)

54A   55A

601   591

Modems

57A

LBRV Codec(s)

611

631   Controller

52B

TEL

53B

621   622

Tandem Switch

55B1   58   55B2

52C

TEL

55C   53C

LBRV Codec(s)   PABX

56C   54C

602   592

Modems

57C

LBRV Codec(s)

612

632   Controller

50

EP 0 593 165 A2

FIG. 5

Receive 96

Low Bit
Rate
Digital
Interface

92D Decompression

92C Compression

72G Generator

72D Detector

76 Message Store

74M Modulator

74D Demodulator

78M Modulator

78D Demodulator

82

98 Transmit

PCM

Receive

90

70

80 Controller

84 Coder

Decoder 100 Transmit

88 Analogue

Receive

Transmit 94

EP 0 593 165 A2

16

**SITE A**
SUBSCRIBER 1

**SITE B**
SUBSCRIBER 3

**SITE C**
SUBSCRIBER 2

*FIG. 6*

EP 0 593 165 A2

FIG.7A

EP 0 593 165 A2

FIG.7B

FIG.7C

EP 0 593 165 A2